# EUROPÄISCHE PATENTSCHRIFT

(11) **EP 3 155 224 B1**
(45) Veröffentlichungstag und Bekanntmachung des Hinweises auf die Patenterteilung: **18.07.2018**
(21) Anmeldenummer: 15725058.0
(22) Anmeldetag: 01.06.2015
(51) Int. Cl.: F01C 21/08, F01N 3/20, F04B 43/12, F04C 5/00

(54) **PUMPE ZUR FÖRDERUNG EINER FLÜSSIGKEIT**
PUMP FOR CONVEYING A FLUID
POMPE POUR TRANSPORTER UN LIQUIDE

(30) Priorität: 12.06.2014 DE 102014108253
(43) Veröffentlichungstag der Anmeldung: 19.04.2017
(73) Patentinhaber: Continental Automotive GmbH, 30165 Hannover (DE)
(72) Erfinder: MAGUIN, Georges, 57155 Marly (FR)
(86) Internationale Anmeldenummer: PCT/EP2015/062058
(87) Internationale Veröffentlichungsnummer: WO 2015/189057

(56) Entgegenhaltungen:
- WO-A1-2012/126544
- GB-A- 768 253

## Beschreibung

Die Erfindung betrifft eine Pumpe zur Förderung einer Flüssigkeit. Die Pumpe kann insbesondere verwendet werden, um in einem Kraftfahrzeug ein flüssiges Additiv zur Abgasreinigung aus einem Tank in eine Abgasbehandlungsvorrichtung zu fördern.

Abgasbehandlungsvorrichtungen, in denen ein flüssiges Additiv benötigt wird, werden beispielsweise für das SCR-Verfahren benötigt. Bei dem SCR-Verfahren (SCR = Selective Catalytic Reduction) werden Stickstoffoxidverbindungen im Abgas einer Verbrennungskraftmaschine unter Zuhilfenahme von Ammoniak zu unschädlichen Substanzen wie Stickstoff, Wasser und CO₂ reduziert. Der Ammoniak für das SCR-Verfahren wird normalerweise aus einer flüssigen Ammoniakvorläuferlösung erzeugt, die in einem Tank gespeichert wird und die aus dem Tank zu der Abgasbehandlungsvorrichtung mit der beschriebenen Pumpe gefördert werden kann. Diese flüssige Ammoniakvorläuferlösung wird auch als flüssiges Additiv, als Reduktionsmittel oder als Reduktionsmittelvorläufer bezeichnet. Die Flüssigkeit ist bevorzugt Harnstoff-Wasser-Lösung. Besonders bevorzugt ist eine Harnstoff-Wasser-Lösung mit einem Harnstoffgehalt von etwa 32,5 %, die unter dem Handelsnamen AdBlue® erhältlich ist. Die Flüssigkeit wird abgasextern (in einem dafür vorgesehenen Reaktor) und/oder abgasintern (in der Abgasbehandlungsvorrichtung) zu Ammoniak umgesetzt.

Problematisch bei Pumpen zur Förderung von derartigen Flüssigkeiten ist, dass diese Flüssigkeiten bei niedrigen Temperaturen einfrieren können. Die beschriebene 32,5 prozentige Harnstoff-Wasser-Lösung friert beispielsweise bei -11 °C ein. Derartig niedrige Temperaturen können bei Kraftfahrzeugen insbesondere während langer Stillstandsphasen im Winter auftreten. Beim Einfrieren dehnt sich Flüssigkeit aus. Die Pumpe muss entweder so ausgelegt sein, dass sie durch einfrierende Flüssigkeit nicht beschädigt wird oder es muss eine Entleerung der Pumpe stattfinden, wenn niedrige Temperaturen auftreten. Damit eine Pumpe entleerbar ist, ist es regelmäßig erforderlich, dass die Pumpe auch Luft fördern kann.

Insbesondere bei Harnstoff-Wasser-Lösung als Flüssigkeit ist außerdem problematisch, dass sich z. B. kristalline Harnstoff-Ausscheidungen oder gasförmige Ammoniakausscheidungen bilden können, die den Betrieb der Pumpe beeinflussen können. Kristalline Harnstoff-Ausscheidungen können auf Bauteile der Pumpe durch Reibung beeinflussen und einen Materialabtrag an den Bauteilen der Pumpe bewirken.

Pumpen zur Förderung derartiger Flüssigkeiten zu einer Abgasbehandlungsvorrichtung sollten vorzugsweise auch in der Lage sein, die Flüssigkeit möglichst genau dosiert zu der Abgasbehandlungsvorrichtung zu fördern. Dies ermöglicht es, auf zusätzliche Maßnahmen zur Dosierung der Flüssigkeit zu verzichten. Zusätzliche Maßnahmen zur Dosierung sind beispielsweise Dosierventile, mit denen die Dosierung zeitgesteuert (über die Öffnungszeit des Dosierventils) erfolgen kann. Gegenüber solchen Dosierventilen ist die Dosierung mit der Pumpe häufig deutlich genauer.

Die Pumpe sollte darüber hinaus einen möglichst hohen mechanischen Wirkungsrad haben, so dass zur Förderung und Dosierung der Flüssigkeit ein möglichst geringer Energiebedarf notwendig ist und gleichzeitig eine möglichst geringe Erwärmung der Pumpe auftritt.

Aus den Druckschriften US 2,544,628, US 3,408,947, DE 2 853 916, DE 38 15 252 A1 und WO 2012/126544 ist ein Pumpentyp bekannt, der auch als Orbitalpumpe bezeichnet wird. Dieser Pumpentyp ist einerseits verhältnismäßig beständig gegenüber einer Volumenausdehnung einer Flüssigkeit beim Einfrieren.

Andererseits kann dieser Pumpentyp auch mit umgekehrter Förderrichtung betrieben werden, so dass eine Entleerung eines Fördermoduls technisch einfach möglich ist. Es ist jedoch ein Bedürfnis, diesen Pumpentyp an die Anforderungen im Umfeld des SCR-Verfahrens anzupassen. Insbesondere soll hinsichtlich der Dosiergenauigkeit eine Verbesserung dieses Pumpentyps erfolgen. Dieser Pumpentyp ist insbesondere problematisch hinsichtlich des Wirkungsgrads und der Dosiergenauigkeit, weil einerseits sehr viel mechanische Energie zur Verformung des konstruktiv notwendigen Membran-Elements notwendig ist und die Verformbarkeit dieses Elements andererseits zu einer Dosierungenauigkeit führen kann.

Hiervon ausgehend ist es Aufgabe der hier vorliegenden Erfindung, eine besonders vorteilhafte Pumpe zur Förderung einer Flüssigkeit vorzustellen, die die vorstehenden Probleme zumindest teilweise löst und insbesondere zur Förderung von Flüssigkeit zur Abgasreinigung (insbesondere Harnstoff-Wasser-Lösung) geeignet ist.

Diese Aufgabe wird gelöst mit einer Pumpe gemäß den Merkmalen des Patentanspruchs 1. Weitere vorteilhafte Ausgestaltungen der Pumpe sind in den abhängigen Patentansprüchen angegeben. Es ist darauf hinzuweisen, dass die in den einzelnen Patentansprüchen dargestellten Merkmale in beliebiger, technologisch sinnvoller Weise miteinander kombinierbar sind und durch erläuternde Sachverhalte aus der Beschreibung ergänzt werden können, wobei weitere Ausführungsvarianten der Pumpe aufgezeigt werden.

Es wird eine Pumpe zur Förderung einer Flüssigkeit beschrieben, aufweisend zumindest ein Pumpengehäuse mit mindestens einem Einlass und mindestens einem Auslass und mit einer Innenumfangsfläche und einer geometrischen Achse. Innerhalb des Pumpengehäuses ist ein Exzenter angeordnet, der um die geometrische Achse relativ zu dem Pumpengehäuse exzentrisch bewegbar ist. In einem Pumpspalt zwischen der Innenumfangsfläche des Pumpengehäuses und einer Außenfläche des Exzenters ist ein verformbares Element angeordnet, wobei mit dem verformbaren Element und der Innenumfangsfläche des Pumpengehäuses ein Förderkanal von dem mindestens einen Einlass zu dem mindestens einen Auslass ausgebildet ist. Weiter wird das verformbare Element von der Außenfläche des Exzenters entlang mindestens eines Abschnitts des Förderkanals derart gegen das Pumpengehäuse gedrückt wird, dass mindestens eine verschiebbare Abdichtung des Förderkanals und zumindest ein geschlossenes Pumpenvolumen in dem Förderkanal ausgebildet sind, die zur Förderung der Flüssigkeit durch eine Drehung des Exzenters entlang des Förderkanals von dem Einlass zu dem Auslass verschiebbar sind. Zudem weist die Außenfläche des Exzenters eine strukturierte Oberfläche auf.

Eine Pumpe mit diesem Aufbau wird auch als Orbitalpumpe bezeichnet. Die Pumpe weist eine (zentrale) geometrische Achse auf, um die herum der Exzenter exzentrisch bewegt werden kann. Vorzugsweise verläuft dafür entlang der Antriebsachse eine Antriebswelle, die den Exzenter mit einem (mindestens einem elektrischen) Antrieb verbindet. Zur räumlichen Beschreibung der Pumpe und ihrer Komponenten wird im Folgenden eine radiale Richtung angenommen, die senkrecht auf der geometrischen Achse der Pumpe steht und sich ausgehend von der geometrischen Achse der Pumpe in radialer Richtung nach außen erstreckt. Tangential zu der geometrischen Achse und tangential zu der Innenumfangsfläche des Pumpengehäuses wird zur räumlichen Beschreibung der Pumpe außerdem eine Umfangsrichtung angenommen. Zur Beschreibung der Pumpe wird auch eine Mittelebene der Pumpe definiert. Diese Mittelebene ist senkrecht zu der geometrischen Achse angeordnet und wird von der radialen Richtung und der Umfangsrichtung aufgespannt. Der Förderkanal verläuft von dem Einlass und zu dem Auslass der Pumpe zumindest abschnittsweise entlang dieser Umfangsrichtung durch das Pumpengehäuse bzw. entlang der Innenumfangsfläche des Pumpengehäuses. Das Pumpengehäuse, der Exzenter, das verformbare Element und der Förderkanal liegen in der Mittelebene und die Mittelebene bildet vorzugsweise auch eine Symmetrieebene für das Pumpengehäuse, den Exzenter und das verformbare Element. Die Innenumfangsfläche ist vorzugsweise zu der geometrischen Achse rotationssymmetrisch.

Das Pumpengehäuse der Pumpe ist vorzugsweise nach Art eines Rings oder einer zylindrischen Kammer aufgebaut, in der der Exzenter (innen) angeordnet ist. Das Pumpengehäuse kann auch als (äußerer) Stator der Pumpe angesehen werden, wobei der Exzenter als (innerer) Rotor bezeichnet werden kann. Im Sinne einer kinematischen Umkehr soll die Erfindung auch solche Konstruktionen erfassen, bei denen das Pumpengehäuse mit Einlass und Auslass innen liegt und der Exzenter das Pumpengehäuse außen umfasst, wobei sich dann der Pumpenspalt zwischen einer Außenumfangsfläche des innen liegenden Pumpengehäuses und einer Innenfläche des Exzenters befindet. Die im Folgenden näher zu definierende strukturierte Oberfläche ist bei dieser kinematischen Umkehr der Pumpe auf der Innenfläche des Exzenters angeordnet. Gemäß dieser kinematischen Umkehr der Pumpe können das Pumpengehäuse als (innerer) Stator oder der Exzenter als (äußerer) Rotor bezeichnet werden. Der Einlass und der Auslass sind an dem Pumpengehäuse angeordnet und ermöglichen das Einströmen und das Ausströmen der Flüssigkeit in das Pumpengehäuse bzw. in den Förderkanal. Das Pumpengehäuse ist vorzugsweise aus Kunststoff. Das Pumpengehäuse kann aber auch aus Metall, einem Metall-Kunststoff-Verbundmaterial oder einem beliebigen anderen Material sein.

Mit dem Begriff "Exzenter" ist hier insbesondere eine kreisförmige Struktur gemeint, die exzentrisch (außermittig) zu der geometrischen Achse angeordnet ist. Die exzentrische Bewegung um die geometrische Achse kann auch als Drehbewegung (Drehung) bezeichnet werden. Grundsätzlich sind zwei Arten von exzentrischen Bewegungen möglich. Die erste Art der exzentrischen Bewegung ist eine echte Rotation des gesamten Exzenters um die geometrische Achse. Die zweite Art der exzentrischen Bewegung ist eine kreisförmige Verschiebung des Exzenters und/oder der Außenfläche des Exzenters. Beide Arten der exzentrischen Bewegung haben den gleichen Einfluss auf die räumliche Position der Außenfläche des Exzenters relativ zu dem Pumpengehäuse und die Verformung des Pumpenspalts der Pumpe durch die Bewegung des Exzenters. Bei der echten Rotation des gesamten Exzenters findet aber zusätzlich eine Rotation der Außenfläche des Exzenters statt, die bei der kreisförmigen Verschiebung so nicht auftritt.

Der Pumpenspalt zwischen dem Pumpengehäuse und dem Exzenter ist insbesondere ringförmig, sichelförmig bzw. umlaufend. Die Spaltbreite des Pumpenspalts wird durch die exzentrische Bewegung des Exzenters jeweils abschnittsweise verändert. Der Förderkanal ist (innerhalb des Spalts) insbesondere zwischen dem verformbaren Element und dem Pumpengehäuse angeordnet und wird von dem Pumpengehäuse und dem verformbaren Element begrenzt. Der Pumpenspalt hat mindestens eine Engstelle, die sich durch eine Drehung bzw. die exzentrische Bewegung des Exzenters in Umfangsrichtung entlang des Pumpengehäuses bzw. entlang des Förderkanals verschiebt. An der Engstelle ist das verformbare Element gegen das Gehäuse gedrückt, so dass die verschiebbare Abdichtung gebildet ist. Das verformbare Element hat im entspannten Zustand vorzugsweise einen Durchmesser der mindestens genauso groß oder größer ist als ein Durchmesser der Innenumfangsfläche des Pumpengehäuses. Der Pumpenspalt ergibt sich insbesondere dadurch, dass das verformbare Element in dem Pumpengehäuse eingesetzt ist und abschnittsweise exzentrisch von dem Exzenter besonders stark gegen das Pumpengehäuse gedrückt wird. Dadurch ergibt sich insbesondere gegenüberliegend zu einer Exzentrizität des Exzenters der Pumpenspalt. Die Bildung des Pumpenspalts wird zusätzlich durch das Vorliegen von Flüssigkeit in der Pumpe unterstützt. Die Flüssigkeit drückt das verformbare Element in dem Pumpengehäuse zusammen, so dass der tatsächliche Durchmesser des verformbaren Elementes in dem Pumpengehäuse kleiner ist als der Durchmesser im entspannten Zustand.

Es kann zwischen einwertigen Exzentern und mehrwertigen Exzentern unterschieden werden. Einwertige Exzenter sind Exzenter, die genau eine verschiebbare Engstelle und damit auch genau eine verschiebbare Abdichtung ausbilden. Einwertige Exzenter haben vorzugsweise eine kreisförmige, insbesondere zylindrische, Außenfläche. Hiermit umfasst sind auch sogenannte "mehrwertige" Exzenter, die eine Mehrzahl von Engstellen des Pumpenspalts bzw. eine Mehrzahl von verschiebbaren Abdichtungen ausbilden. Solche "mehrwertigen" Exzenter können beispielsweise auch durch eine Mehrzahl von Rollen gebildet sein, die innen auf dem verformbaren Element abrollen und die Engstellen ausbilden. Die Oberfläche der Rollen bildet dann die Außenfläche des Exzenters. Die weiter oben beschriebene strukturierte Oberfläche kann dann auf der Außenfläche der Rollen angeordnet sein. Ein "mehrwertiger" Exzenter kann auch mit einer Kurvenscheibe ausgebildet sein, die beispielsweise eine oval geformte Außenfläche haben kann.

Der Förderkanal hat zwischen dem Pumpengehäuse und dem verformbaren Element einen für Flüssigkeit durchströmbaren Kanalquerschnitt, der beispielsweise (je nach Größe der Pumpe) an der größten Stelle mit dem maximalen Abstand zu der mindestens einen verschiebbaren Abdichtung zwischen 1 mm² und 50 mm² betragen kann. Der Einlass und der Auslass sind in einer Förderrichtung der Pumpe vorzugsweise mit einem Winkelabstand von mehr als 270° zueinander (gemessen in der Mittelebene) angeordnet. Entgegen der Förderrichtung haben der Einlass und der Auslass damit einen Winkelabstand von weniger als 90° zueinander.

Das verformbare Element ist vorzugsweise derart zwischen dem Exzenter und dem Pumpengehäuse angeordnet, dass der Exzenter das verformbare Element bereichsweise oder abschnittsweise derart gegen bzw. an die Umfangsfläche des Pumpengehäuses drückt, dass damit die mindestens eine verschiebbare Abdichtung ausgebildet ist. An der Abdichtung existiert ein (linienförmiger oder flächiger) Kontakt zwischen dem verformbaren Element und der Innenumfangsfläche des Pumpengehäuses, der von der Flüssigkeit nicht durchströmt werden kann. Anders ausgedrückt liegt das verformbare Element im Bereich der verschiebbaren Abdichtung vollständig an dem Pumpengehäuse an, so dass der Kanalquerschnitt im Bereich der verschiebbaren Abdichtung keine durchströmbare Querschnittsfläche mehr hat. Der Förderkanal ist demnach im Bereich der verschiebbaren Abdichtung unterbrochen. Damit ist innerhalb des Förderkanals auch mindestens ein geschlossenes Pumpenvolumen gebildet. Mit einem geschlossenen Pumpenvolumen ist gemeint, dass ein zumindest einseitig (stromaufwärts oder stromabwärts entlang des Förderkanals) verschlossener Abschnitt des Förderkanals existiert. Durch eine Verschiebung der verschiebbaren Abdichtung wird auch das mindestens eine geschlossene Pumpenvolumen verschoben, so dass die Flüssigkeit, die sich in dem geschlossenen Pumpenvolumen befindet, gefördert wird. Vorzugsweise werden bei dem Betrieb der Pumpe mehrere geschlossene Pumpenvolumina von dem Einlass der Pumpe zu dem Auslass der Pumpe verschoben, um die Flüssigkeit zu fördern. Damit wird ein geschlossenes Pumpenvolumen in der Nähe des Einlasses ausgebildet (definiert zumindest einseitig verschlossen) und dann am Auslass aufgelöst (definiert zumindest einseitig wieder geöffnet). An dem Einlass ist ein geschlossenes Pumpenvolumen (nur) einseitig stromab durch eine verschiebbare Abdichtung geschlossen und stromauf mit dem Einlass verbunden, so dass Flüssigkeit durch den Einlass in das geschlossene Pumpenvolumen einströmen kann. An dem Auslass ist das geschlossene Pumpenvolumen (nur noch) einseitig stromauf durch eine Abdichtung verschlossen und stromab mit dem Auslass verbunden, so dass die Flüssigkeit durch den Auslass aus dem geschlossenen Pumpenvolumen ausströmen kann. Dazwischen existiert (auf dem Weg des geschlossenen Pumpenvolumens von dem Einlass zu dem Auslass) eine Phase, in der das geschlossene Pumpenvolumen stromaufwärts und stromabwärts (beidseitig) durch die mindestens eine verschiebbare Abdichtung verschlossen ist. Wenn nur eine einzelne verschiebbare Abdichtung vorgesehen ist, ist diese eine verschiebbare Abdichtung dann so positioniert, dass sowohl der Einlass als auch der Auslass verschlossen sind.

Das verformbare Element kann auch als verformbare Membran bezeichnet werden. Mit dem Begriff "Membran" ist hier keine zwingende Aussage darüber getroffen, ob das verformbare Element eine flächige Ausdehnung hat. Der Begriff "Membran" soll als Hinweis darauf verstanden werden, dass es sich bei dem verformbaren Element um eine flexible Struktur handelt, die zur Förderung von Flüssigkeit verformt werden kann und die zur Ausbildung der mindestens einen verschiebbaren Abdichtung und des mindestens einen verschiebbaren Pumpenvolumens mit dem Pumpengehäuse geeignet ist. Als Material für das verformbare Element bzw. die verformbare Membran wird vorzugsweise ein Elastomer (beispielsweise Kautschuk oder Latex) verwendet. Zur Erhöhung der Haltbarkeit und/oder zur Herstellung und Aufrechterhaltung der Flexibilität kann das Material des verformbaren Elements Zusatzstoffe enthalten. Vorzugsweise ist das verformbare Element in alle Richtungen (in axialer Richtung, in radialer Richtung und in Umfangsrichtung) flexibel. Es ist allerdings auch möglich, dass das verformbare Element eine teilweise gerichtete Flexibilität hat. Beispielsweise kann es eine höhere Flexibilität in radialer Richtung als in Umfangsrichtung und in axialer Richtung aufweisen. Das Verformen des verformbaren Elements in einer Richtung bedingt typischerweise auch eine Verformung in die andere Richtung. Das verformbare Element dehnt sich beispielsweise in axialer Richtung und/oder in Umfangsrichtung aus, wenn es in radialer Richtung zusammengedrückt wird.

An der Pumpe ist vorzugsweise eine stationäre Abdichtung vorgesehen, die eine nicht gewollte (direkte) Rückströmung der Flüssigkeit von dem Auslass zu dem Einlass (entgegen der Förderrichtung) verhindert. Die stationäre Abdichtung kann ortsfest mit dem Pumpengehäuse bereitgestellt werden. Üblicherweise ist die stationäre Abdichtung zwischen dem Auslass und dem Einlass (ortsfest) positioniert. Das verformbare Element kann im Bereich der stationären Abdichtung beispielsweise an dem Pumpengehäuse angeklemmt oder angeklebt sein, um eine fluiddichte Abdichtung zwischen dem Pumpengehäuse und dem verformbaren Element dauerhaft zu gewährleisten. Die stationäre Abdichtung ist unabhängig von der Position des Exzenters fluiddicht.

Die Pumpe hat vorzugsweise darüber hinaus in axialer Richtung beidseitig der Mittelebene der Pumpe jeweils eine (ringförmige und stationäre) axiale Abdichtung, die das Pumpengehäuse und das verformbare Element miteinander abdichtet und damit den Förderkanal seitlich begrenzen Vorzugsweise existieren also zwei (ringförmige) axiale Abdichtungen. Diese radialen Abdichtungen können beispielsweise durch eine Klemmung und/oder eine Anlage des verformbaren Elements an dem Pumpengehäuse realisiert sein. Vorzugsweise gehen beide axialen Abdichtungen unmittelbar in die stationäre Abdichtung über. So kann sichergestellt werden, dass an der stationären Abdichtung keine Leckage von dem Auslass zurück zu dem Einlass stattfindet.

Die Pumpe ist vorzugsweise für eine Förderung von Flüssigkeit in Förderrichtung von dem Einlass zu dem Auslass ausgelegt. Durch eine Umkehr der Richtung der exzentrischen (Dreh-)Bewegung des Exzenters ist ggf. auch eine Umkehr der Förderrichtung (anstatt vom Einlass zum Auslass umgekehrt von Auslass zum Einlass) möglich.

Die strukturierte Oberfläche der Außenfläche des Exzenters kann auch als Struktur oder als Profil bezeichnet werden. Die strukturierte Oberfläche zeichnet sich insbesondere dadurch aus, dass sie eine Mikrostruktur der Oberfläche des Exzenters bildet, wobei eine Strukturtiefe bevorzugt mindestens 1 mm (Millimeter) beträgt. Die strukturierte Oberfläche bzw. das Profil bzw. die Struktur sind insbesondere von der Exzentrizität des Exzenters zu unterscheiden. Durch die Exzentrizität des Exzenters wird eine Makrostruktur der Außenfläche des Exzenters gebildet, die eine kontinuierliche Verjüngung und des Pumpenspalts hin zur Engstelle und zur verschiebbaren Abdichtung und eine kontinuierliche Erweiterung des Pumpenspaltes weg von der Engstelle und der verschiebbaren Abdichtung ausbildet. Demgegenüber bildet die strukturierte Oberfläche bzw. das Profil bzw. die Struktur eine Mikrostruktur der Außenfläche des Exzenters. Die strukturierte Oberfläche bewirkt, dass der Pumpenspalt überall (sowohl im Bereich der Engstelle an der verschiebbaren Abdichtung als auch in allen anderen Bereichen) eine entlang der Umfangsrichtung schnell wechselnde Breite hat. Die strukturierte Oberfläche der Außenfläche des Exzenters bewirkt, dass das verformbare Element von Außenfläche des Exzenters nur abschnittsweise abgestützt wird. Es hat sich herausgestellt, dass durch eine solche strukturierte Oberfläche auf der Außenfläche des Exzenters die Reibungskräfte in der Pumpe und insbesondere in dem verformbaren Element maßgeblich reduziert werden können. Hierdurch wird ein Antriebsmoment deutlich reduziert, welches für die exzentrische Bewegung des Exzenters notwendig ist.

Besonders vorteilhaft ist die Pumpe, wenn durch die strukturierte Oberfläche im Bereich der verschiebbaren Abdichtung im verformbaren Element eine Druckverteilung existiert, die entlang des Förderkanals mindestens ein lokales Druckmaximum und mindestens ein lokales Druckminimum bildet.

Mit einem lokalen Druckmaximum und einem lokalen Druckminimum ist jeweils gemeint, dass in Umfangsrichtung seitlich des Druckmaximums bzw. des Druckminimums der Druck in dem verformbaren Element kleiner bzw. größer ist. Der Druck in dem verformbaren Element an der verschiebbaren Abdichtung entsteht, weil das verformbare Element im Bereich der verschiebbaren Abdichtung von dem Exzenter zusammengedrückt wird. Der Druck in dem verformbaren Element ist typischerweise in der in Umfangsrichtung definierten Mitte der verschiebbaren Abdichtung am größten. Die strukturierte Oberfläche der Außenfläche bewirkt eine überlagerte Wellung der Druckverteilung in dem verformbaren Element an der verschiebbaren Abdichtung. Vorzugsweise existieren in dem verformbaren Element an der verschiebbaren Abdichtung entlang in Umfangsrichtung mehrere (oder Sogar eine Vielzahl) Druckmaxima und Druckminima. Die Druckmaxima und die Druckminima sind vorzugsweise in Umfangrichtung ortsfest. Bei einer Verschiebung der verschiebbaren Abdichtung verkleinert sich der Druck an den Druckmaxima und den Druckminima in Förderrichtung hinter der verschiebbaren Abdichtung, während der Druck an Druckmaxima und Druckminima in Förderrichtung vor der verschiebbaren Abdichtung ansteigt. In Umfangsrichtung in der Mitte der verschiebbaren Abdichtung ist der Druck an den Druckmaxima und den Druckminima am größten.

Beim Verschieben der verschiebbaren Abdichtung muss Verformungsenergie zur Verformung des verformbaren Elementes aufgebraucht werden. Diese Verformungsenergie wird beim Komprimieren des verformbaren Elementes im stromabwärtigen Bereich der stationären Abdichtung mechanisch in das verformbare Element eingebracht und bereits teilweise in Wärme umgesetzt. Beim Entspannen des verformbaren Elements im stromaufwärtigen Bereich der stationären Abdichtung wird ein in dem verformbaren Element mechanisch gespeicherte Rest von Verformungsenergie auch noch als Wärme frei gesetzt.

Weiterhin ist die Pumpe bevorzugt, wenn die strukturierte Oberfläche so ausgebildet ist, dass der Druck in dem verformbaren Element an einem lokalen Druckminimum größer ist als ein vorbestimmter maximaler Betriebsdruck der Pumpe.

Der maximale Betriebsdruck ist der Druck, welcher von der Pumpe am Auslass maximal bereitgestellt werden kann. Der maximale Betriebsdruck liegt üblicherweise in einem Bereich zwischen 3 und 8 bar und wird durch die Spezifikationen der Pumpe definiert. Durch eine geeignete Gestaltung der strukturierten Oberfläche bzw. des Profils kann erreicht werden, dass der Druck in dem verformbaren Element an einem lokalen Druckminimum (unabhängig von der Position der verschiebbaren Abdichtung entlang des Förderkanals) niemals unter den vorbestimmten maximalen Betriebsdruck fällt. Hierdurch wird erreicht, dass eine Rückströmung der Flüssigkeit durch die stationäre Abdichtung immer verhindert ist.

Weiterhin ist die Pumpe vorteilhaft, wenn der Exzenter einen äußeren Lagerring und einen inneren Exzenterbereich aufweist, wobei zwischen dem äußeren Lagerring und dem inneren Exzenterbereich ein Lager angeordnet ist, durch welches eine exzentrische Drehbewegung des inneren Exzenterbereichs in eine exzentrische kreisende Bewegung des äußeren Lagerrings umgesetzt wird, und die Außenfläche mit der strukturierten Oberfläche an dem äußeren Lagerring angeordnet ist.

Das Lager ist vorzugsweise ein Kugellager, ein Nadellager oder ein Rollenlager. Der innere Exzenterbereich des Exzenters führt im Betrieb eine Drehbewegung um die Achse aus. Dafür ist der innere Exzenterbereich über eine Antriebswelle mit dem Antrieb der Pumpe verbunden. Aufgrund der exzentrischen Anordnung und gegebenenfalls auch aufgrund der äußeren Form des Exzenters ergibt sich durch die exzentrische Drehbewegung des inneren Exzenterbereichs eine exzentrische kreisende Bewegung der Außenfläche des Exzenters. Die exzentrische Bewegung wird auf den äußeren Lagerring übertragen. Durch ein Lager zwischen dem inneren Exzenterbereich und dem äußeren Lagerring kann eine exzentrische Drehbewegung des inneren Exzenterbereichs in eine exzentrische kreisende Bewegung des äußeren Lagerrings umgesetzt werden, ohne dass der Drehbewegungsanteil der Bewegung des inneren Exzenterbereichs mit auf den äußeren Lagerring übertragen wird. Die Tatsache, dass die Bewegung des äußeren Lagerrings keinen Drehbewegungsanteil aufweist, ermöglicht es, Schubspannungen in dem verformbaren Element und innere Reibungskräfte der Pumpe zu reduzieren. Das verformbare Element wird durch die Bewegung des Exzenters (nur) gewalkt. An einer Kontaktfläche des Exzenters bzw. des äußeren Lagerings und des verformbaren Elements an der Außenfläche des Exzenters wirken vorzugsweise "nur" Druckkräfte und im Wesentlichen keine Reibungskräfte. Eine entsprechende Aufteilung des Exzenters in einen inneren Exzenterbereich und einen äußeren Lagerring ist im Sinne einer kinematischen Umkehr auch möglich, wenn der Exzenter ein äußerer Rotor ist, der um ein (inneres) Pumpengehäuse herum angeordnet ist.

Besonders bevorzugt ist die Pumpe, wenn ein äußerer Lagerring des Exzenters relativ zu dem Pumpengehäuse drehfest ist.

Die auf der Außenfläche des Exzenters an dem äußeren Lagerring angeordnete strukturierte Oberfläche ist damit relativ zu dem Pumpengehäuse ebenfalls drehfest positioniert. Daher verschieben sich durch die strukturierte Oberfläche bedingte lokale Druckmaxima und lokale Druckminima in dem verformbaren Element im Bereich der verschiebbaren Abdichtung durch eine Bewegung des Exzenters nicht. Um den äußeren Lagerring relativ zu dem Pumpengehäuse drehfest zu machen, kann der äußere Lagerring mit dem Pumpengehäuse angebunden sein. Eine Anbindung kann beispielsweise an der stationären Abdichtung realisiert sein.

Weiterhin ist die Pumpe vorteilhaft, wenn die strukturierte Oberfläche eine parallel zur geometrischen Achse ausgerichtete Wellung mit Wellenbergen und Wellentälern umfasst.

Durch eine so strukturierte Oberfläche existieren jeweils senkrecht zum Förderkanal angeordnete lokale Druckmaxima und lokale Druckminima im verformbaren Element. Es hat sich herausgestellt, dass eine derartige Wellung eine besonders gute Abdichtung des Förderkanals bewirkt und gleichzeitig den Energieaufwand zur Verformung (Verformungsenergie) des verformbaren Elements beim Verschieben der verschiebbaren Abdichtung besonders stark reduziert. Die Wellenberge und die Wellentäler erstrecken sich vorzugsweise in axialer Richtung über die gesamte Breite des Exzenters bzw. des verformbaren Elements.

Vorzugsweise weist die Außenfläche des Exzenters eine zylindrische Grundform auf, die von der strukturierten Oberfläche bereichsweise unterbrochen ist. Dies ist für sämtliche offenbarte strukturierte Oberflächen vorteilhaft. Für eine mit einer Wellung ausgeführte strukturierte Oberfläche bedeutet dies, dass die Wellung (nur) mit Hilfe von Vertiefungen einer zylindrischen Grundform der Außenfläche gebildet ist und keine Erhebungen existieren, die sich über die zylindrische Grundform der Außenfläche hinaus erstrecken.

Weiterhin vorteilhaft ist die Pumpe, wenn die Wellenberge der Wellung einen Abstand zueinander aufweisen, der kleiner ist als eine Ausdehnung der verschiebbaren Abdichtung in Umfangsrichtung entlang des Förderkanals, so dass mit den Wellenbergen in der verschiebbaren Abdichtung entlang des Förderkanals zumindest zwei lokale Druckmaxima ausgebildet sind.

Vorzugsweise ist der Abstand der Wellenberge der Wellung sogar deutlich kleiner als die Ausdehnung der verschiebbaren Abdichtung in Umfangsrichtung entlang des Förderkanals. Vorzugsweise ist der Abstand 10 mal oder sogar 20 mal kleiner. Hierdurch kann eine besonders gleichmäßige Verteilung von Druckmaxima und Druckminima in dem verformbaren Element im Bereich der verschiebbaren Abdichtung erreicht werden.

Auch vorteilhaft ist die Pumpe, wenn die strukturierte Oberfläche ein Muster von Vertiefungen der Außenfläche umfasst, wobei die Vertiefungen jeweils umlaufend begrenzt sind.

Durch ein solches (geometrisches bzw. wiederkehrendes) Muster kann die Verformungsenergie zur Verformung des verformbaren Elements im Bereich der verschiebbaren Abdichtung und damit das notwendige Drehmoment zur Bewegung des Exzenters ebenfalls wirkungsvoll reduziert werden.

Weiterhin ist vorteilhaft, wenn die strukturierte Oberfläche eine Golfballoberfläche der Außenfläche umfasst.

Eine Golfballoberfläche ist jeweils durch etwa halb-kugelförmige Vertiefungen der Außenfläche gebildet, welche ein regelmäßiges Muster bilden. Die notwendige Verformungsenergie und das notwendige Drehmoment können durch ein solches Muster ebenfalls wirkungsvoll reduziert werden.

Besonders vorteilhaft ist es, wenn die strukturierte Oberfläche des Exzenters mit weichen Übergängen ausgeführt ist, so dass Kerbkräfte vermieden werden, die insbesondere an den Kontaktstellen des verformbaren Elements und des Exzenters in dem verformbaren Element auftreten können.

Außerdem ist es bevorzugt, wenn die strukturierte Oberfläche der Außenfläche des Exzenters der Pumpe in einem Winkelabschnitt um die geometrische Achse unterbrochen ist, wobei der Winkelabschnitt zumindest den Einlass oder den Auslass abdeckt.

Im Bereich des Winkelabschnitts muss die Außenfläche keine strukturierte Oberfläche aufweisen. Damit ist die Außenfläche in dem Winkelabschnitt nicht strukturiert bzw. glatt. Insbesondere ist eine die strukturierte Oberfläche bildende Wellung oder ein die strukturierte Oberfläche bildendes Muster von Vertiefungen im Bereich des Winkelabschnitts unterbrochen. Durch die Unterbrechung der strukturierten Oberfläche in einem Winkelabschnitt, der den Einlass und den Auslass der Pumpe abdeckt, kann sichergestellt werden, dass die Flüssigkeitsströmung in der Pumpe im Bereich des Einlass und des Auslass nicht unterbrochen ist. Wie bereits weiter oben ausgeführt ist der Exzenter relativ zu dem Pumpengehäuse bevorzugt drehfest, so dass der Winkelabschnitt des Exzenters ohne strukturierte Oberfläche relativ zu dem Einlass und zu dem Auslass dauerhaft so positioniert sein kann, dass der Einlass und der Auslass von dem Winkelabschnitt abgedeckt sind. Gleichzeitig ist aber durch die strukturierte Oberfläche im Bereich außerhalb des Winkelabschnitts trotzdem das notwendige Drehmoment zum Antrieb des Exzenters reduziert. Der Winkelabschnitt ist vorzugsweise kleiner als 90° und besonders bevorzugt gleichzeitig größer als 50°.Die strukturierte Oberfläche erstreckt sich dann über einen Restwinkel außerhalb des Winkelabschnitts von zwischen 270° und 310°.

Weiter wird ein Kraftfahrzeug vorgeschlagen, aufweisend eine Verbrennungskraftmaschine, eine Abgasbehandlungsvorrichtung zur Reinigung der Abgase der Verbrennungskraftmaschine sowie eine beschriebene Pumpe, wobei die Pumpe dazu eingerichtet ist, ein flüssiges Additiv zur Abgasreinigung aus einem Tank zu einem Injektor zu fördern, mit dem das flüssige Additiv der Abgasbehandlungsvorrichtung zugeführt werden kann.

Die Abgasbehandlungsvorrichtung umfasst vorzugsweise ein SCR-Katalysator, in welchem mit dem von der Pumpe geförderten flüssigen Additiv (beispielsweise Harnstoff-Wasser-Lösung) das SCR-Verfahren durchgeführt werden kann.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung beschreiben, auf die die Erfindung jedoch nicht begrenzt ist. Insbesondere ist darauf hinzuweisen, dass die Figuren und insbesondere die in den Figuren dargestellten Größenverhältnisse nur schematisch sind. Es zeigen:
- Fig. 1:: eine dreidimensionale Ansicht einer beschriebenen Pumpe,
- Fig. 2:: einen Schnitt durch eine beschriebene Pumpe entlang einer Mittelebene,
- Fig. 3:: einen Exzenter für eine beschriebene Pumpe,
- Fig. 4:: eine funktionale Darstellung einer verschiebbaren Abdichtung der beschriebenen Pumpe,
- Fig. 5:: eine Druckverteilung in einem verformbaren Element im Bereich einer verschiebbaren Abdichtung der beschriebenen Pumpe,
- Fig. 6:: eine erste Ausführungsvariante einer Außenfläche des Exzenters bei einer beschriebenen Pumpe,
- Fig. 7:: eine zweite Ausführungsvariante einer Außenfläche des Exzenters bei einer beschriebenen Pumpe,
- Fig. 8:: eine dritte Ausführungsvariante einer Außenfläche des Exzenters bei einer beschriebenen Pumpe,
- Fig. 9:: eine vierte Ausführungsvariante einer Außenfläche des Exzenters bei einer beschriebenen pumpe,
- Fig. 10:: eine funktionale Darstellung einer stationären Abdichtung bei einer weiteren Ausführungsvariante einer beschriebenen Pumpe,
- Fig. 11:: eine funktionale Darstellung einer stationären Abdichtung bei noch einer weiteren Ausführungsvariante einer beschriebenen Pumpe,
- Fig. 12:: einen Schnitt durch eine beschriebene Pumpe,
- Fig. 13:: einen Schnitt durch eine besondere Ausführungsvariante der beschriebenen Pumpe entlang der Mittelebene, und
- Fig. 14:: ein Kraftfahrzeug, aufweisend eine beschriebene Pumpe.

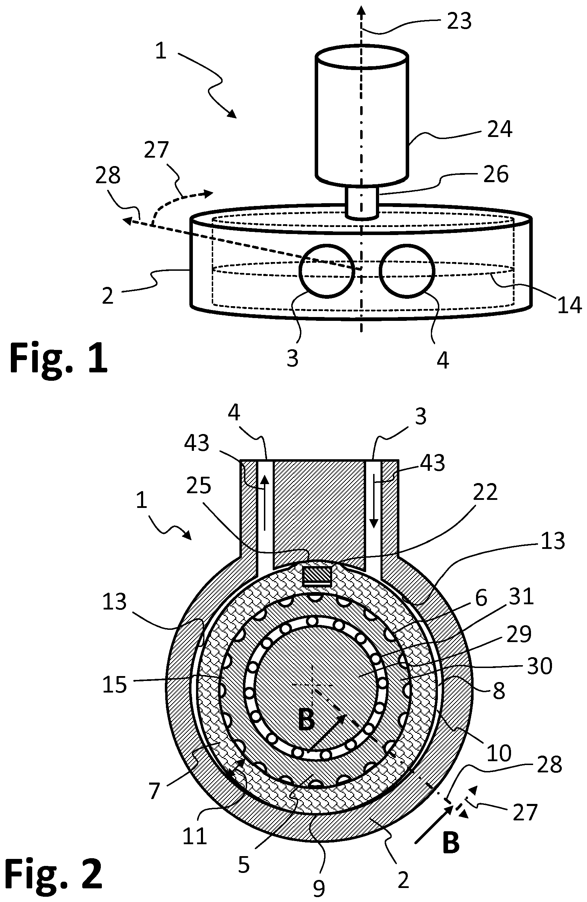

Fig. 1 zeigt eine dreidimensionale Ansicht der Pumpe 1. Zur räumlichen Beschreibung der Pumpe 1 ist eine geometrische Achse 23 definiert. Außerdem sind eine radiale Richtung 28 und eine Umfangsrichtung 27 zur Beschreibung der räumlichen Anordnung der Pumpe dargestellt. Die Pumpe 1 hat ein Pumpengehäuse 2 mit einem Einlass 3 und einem Auslass 4. Entlang der geometrischen Achse 23 oberhalb des Pumpengehäuses 2 ist der Antrieb 24 der Pumpe 1 angeordnet, welcher über eine Antriebswelle 26 mit dem hier nicht dargestellten Exzenter in dem Pumpengehäuse 2 verbunden ist. Auch definiert ist eine Mittelebene 14, in der das Pumpengehäuse 2 und den hier nicht dargestellten Exzenter liegen, und die vorzugsweise eine Symmetrieebene zumindest für das Pumpengehäuse 2 und den Exzenter bildet.

Fig. 2 zeigt einen Schnitt durch die in Fig. 1 dargestellte Pumpe entlang der in Fig. 1 dargestellten Mittelebene 14. Zur Orientierung sind in Fig. 2 die Umfangsrichtung 27 und die radiale Richtung 28 dargestellt. Zu erkennen ist das Pumpengehäuse 2 mit dem Einlass 3 und dem Auslass 4. In dem Pumpengehäuse 2 befindet sich der Exzenter 5, welcher einen inneren Exzenterbereich 29, einen äußeren Lagerring 30 und ein Lager 31 aufweist. Zwischen dem Exzenter 5 und dem Pumpengehäuse 2 existiert ein Pumpenspalt 11, dessen Breite durch die exzentrische Bewegung des Exzenters 5 (jeweils lokal) verändert werden kann. Der Pumpenspalt 11 ist insbesondere zwischen einer Innenumfangsfläche 13 des Pumpengehäuses 2 und einer Außenfläche 6 des Exzenters 5 ausgebildet. In dem Pumpenspalt 11 ist ein (ringförmiges) verformbares Element 7 angeordnet. Zwischen dem verformbaren Element 7 und dem Pumpengehäuse 2 ist in dem Pumpenspalt 11 der Förderkanal 8 ausgebildet. Durch die Exzentrizität des Exzenters 5 ist eine verschiebbare Abdichtung 9 ausgebildet an der das verformbare Element direkt an dem Pumpengehäuse 2 anliegt und der Förderkanal 8 daher unterbrochen ist. Durch die verschiebbare Abdichtung 9 ist der Förderkanal 8 in verschiebbare Pumpenvolumina 10 unterteilt. Die verschiebbare Abdichtung 9 ist insbesondere dadurch ausgebildet, dass das verformbare Element 7 an der Innenumfangsfläche 13 des Pumpengehäuses 2 anliegt. Die Pumpe 1 weist zudem eine stationäre Abdichtung 25 des Förderkanals 8 auf. Die stationäre Abdichtung 25 ist hier dadurch ausgebildet, dass das verformbare Element 7 zwischen dem Auslass 4 und dem Einlass 3 mit Hilfe eines Stifts 22 an dem Pumpengehäuse 2 angeklemmt ist. Zwischen dem Pumpengehäuse 2 und dem verformbaren Element 7 kann an der stationären Abdichtung 25 keine Flüssigkeit hindurch gelangen. Die stationäre Abdichtung 25 verhindert so eine Rückströmung von Flüssigkeit entlang des Förderkanals 8 von dem Auslass 4 zu dem Einlass 3. Durch eine exzentrische Bewegung des Exzenters 5 wird die Flüssigkeit durch den Förderkanal 8 mit einer Förderrichtung 43 gefördert. Durch eine Umkehr der Richtung der exzentrischen Bewegung des Exzenters wird die Förderrichtung 43 umgekehrt. Die Außenfläche 6 des Exzenters 5 hat eine strukturierte Oberfläche 15, so dass der Exzenter 5 nur bereichsweise an dem verformbaren Element 7 anliegt bzw. auf das verformbare Element 7 drückt.

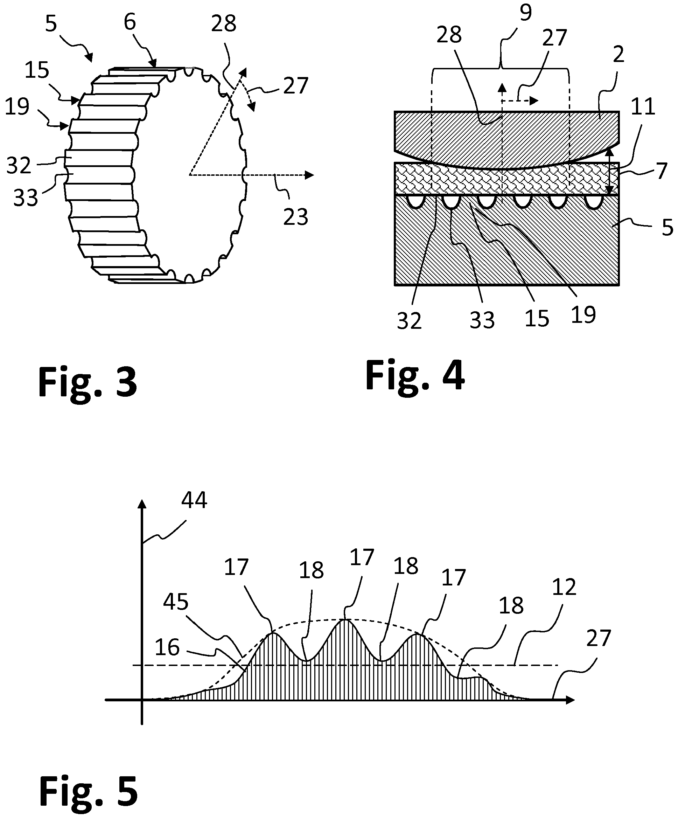

In Fig. 3 ist der Exzenter 5 des verformbaren Elements mit der Außenfläche 6 in einer dreidimensionalen Ansicht dargestellt. Die Außenfläche 6 hat als strukturierte Oberfläche 15 eine Wellung 19 mit Wellenbergen 32 und Wellentälern 33. Zur Orientierung sind in Fig. 3 auch die geometrische Achse 23, die radiale Richtung 28 und die Umfangsrichtung 27 dargestellt.

In Fig. 4 ist eine funktionale Darstellung einer verschiebbaren Abdichtung 9 der hier beschriebenen Pumpe. Die Darstellung in Fig. 4 entspricht einer Übertragung des tatsächlich gekrümmten Förderkanals in eine lineare Darstellung. Zu erkennen sind das Pumpengehäuse 2, der Exzenter 5 und das dazwischen angeordnete verformbare Element 5. Zur Orientierung sind die radiale Richtung 28 und die Umfangsrichtung 27 mit Pfeilen aufgetragen. Der Exzenter 5 hat an seiner Außenfläche 6 eine strukturierte Oberfläche 15 nach Art eines Profils mit einer Wellung 19 mit Wellenbergen 32 und Wellentälern 33.

In Fig. 5 ist in einem Diagramm eine Druckverteilung 16 dargestellt, wie sie sich an der verschiebbaren Abdichtung 9 gemäß Fig. 4 aufgrund der strukturierten Oberfläche des Exzenters in dem verformbaren Element ergibt. Die senkrechte Achse des Diagramms ist eine Druckachse 44, auf der der Druck aufgetragen ist. Die waagerechte Achse des Diagramms entspricht der Umfangsrichtung 27. Zu erkennen ist eine theoretische Druckverteilung 45, die sich im Bereich der verschiebbaren Abdichtung in dem verformbaren Element aufgrund der Exzentrizität des Exzenters ergeben würde, wenn der Exzenter keine strukturierte Oberfläche aufweisen würde. Durch die strukturierte Oberfläche weicht die tatsächliche Druckverteilung 16 von der theoretischen Druckverteilung 45 ab. Im Bereich von Wellentälern der als Wellung ausgeführten strukturierten Oberfläche existieren Druckminima 18 in dem verformbaren Element, während im Bereich der Wellenberge der als Wellung ausgeführten strukturierten Oberfläche Druckmaxima 17 existieren. In dem Diagramm in Fig. 5 auch dargestellt ist der Betriebsdruck 12. Zu erkennen ist, dass die Druckminima 18 größer sind als der Betriebsdruck 12.

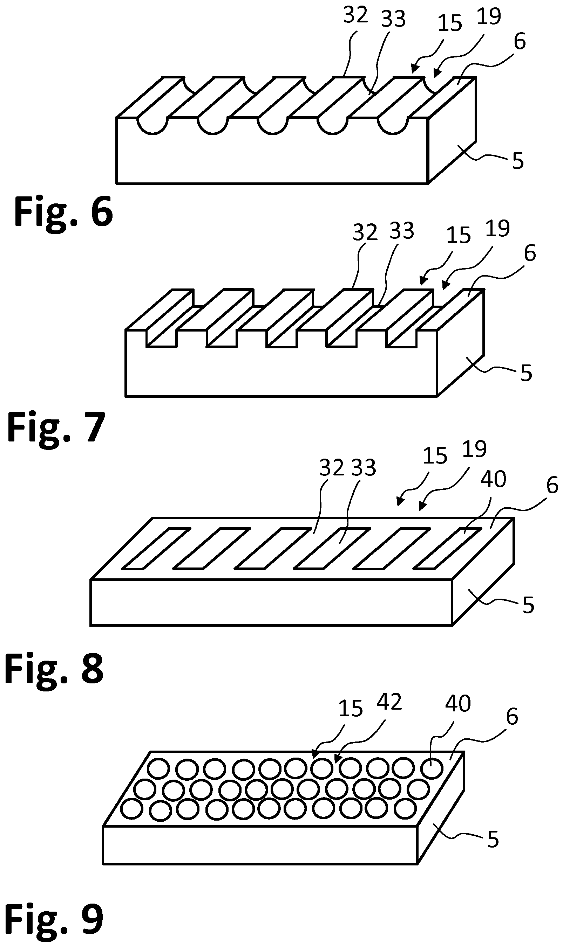

Fig. 6, 7, 8 und 9 zeigen jeweils Außenflächen 6 für Exzenter 5, wobei zur Darstellung hier jeweils der Fig. 4 entsprechende lineare Darstellungen gewählt wurden. Die Außenfläche 6 der Exzenter 5 in den Fig. 6, 7, 8 und 9 weist jeweils eine strukturierte Oberfläche 15 auf.

Gemäß Fig. 6 ist die strukturierte Oberfläche 15 als Wellung 19 mit Wellenbergen 32 und Wellentälern 33 ausgeführt, wobei die Wellentäler 33 jeweils als Rillen mit halbkreisförmigem Querschnitt realisiert sind.

Fig. 7 zeigt eine strukturierte Oberfläche 15 als Wellung 19 mit Wellenbergen 32 und Wellentälern 33, wobei die Wellentäler 33 und die Wellenberge 32 jeweils reckteckförmig ausgeführt sind.

Fig. 8 zeigt eine als Wellung 19 ausgeführte strukturierte Oberfläche 15, welche ebenfalls Wellenberge 32 und Wellentäler 33 aufweist, wobei gemäß Fig. 8 die Wellentäler 33 jeweils axial begrenzt sind. Die Wellentäler 33 bilden damit gleichzeitig auch Vertiefungen 40 in der Außenfläche 6 des Exzenters 5.

Fig. 9 zeigt eine strukturierte Oberfläche 15, welche auch als Golfballoberfläche 42 bezeichnet werden kann, die regelmäßig angeordnete vorzugsweise (halb-)kugelförmige Vertiefungen 40 in der Außenfläche 6 des Exzenters 5 umfasst.

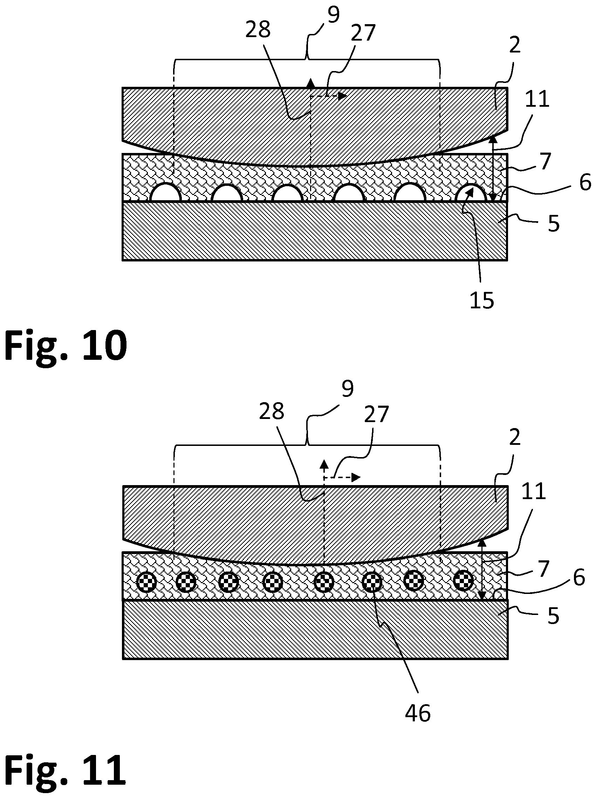

Die Fig. 10 und 11 erläutern weitere oder alternative Ausführungsvarianten einer Pumpe, die der hier beschriebenen Pumpe sehr ähnlich sind. Die hier für die Pumpe beschriebenen Ausführungsmerkmale (insbesondere die in den Unteransprüchen beanspruchten Ausführungsmerkmale) können in analoger Weise auf die in den Fig. 10 und 11 erläuterten alternativen Ausführungsvarianten einer Pumpe übertragen werden. Die in den Fig. 10 und 11 beschriebenen alternativen Ausführungsvarianten können anstatt einer strukturierten Oberfläche der Außenfläche 6 des Exzenters 5 verwendet werden. Die gemäß den Fig. 10 und 11 vorgegebenen Ausführungsvarianten sollen insbesondere auch unabhängig von der beanspruchten Ausführungsvariante der Pumpe hier beschrieben sein und können ggf. im Rahmen von Teilanmeldungen weiterverfolgt werden.

In den Fig. 10 und 11 ist jeweils das Pumpengehäuse 2, der Exzenter 5 sowie das verformbare Element 7 entsprechend der Darstellung in Fig. 4 gezeigt. Zur Orientierung sind die radiale Richtung 28 und die Umfangsrichtung 27 markiert. Zu erkennen ist der Pumpenspalt 11 zwischen dem Pumpengehäuse 2 und dem Exzenter 5 sowie in welcher das verformbare Element 7 angeordnet ist. An der verschiebbaren Abdichtung 9 wird das verformbare Element 7 von dem Exzenter 5 an das Pumpengehäuse 2 gedrückt.

Anstatt einer strukturierten Oberfläche 15 auf der Außenfläche 6 des Exzenters ist gemäß Fig. 10 eine strukturierte Oberfläche 15 auf der der Außenfläche 6 zugewandten Seite des verformbaren Elements 7 ausgebildet. Für diese strukturierte Oberfläche 15 können sämtliche in den Fig. 6, 7, 8 und 9 dargestellten Varianten gewählt werden. Durch eine solche strukturierte Oberfläche 15 an dem verformbaren Element 7 kann eine der Fig. 5 entsprechende Druckverteilung in dem verformbaren Element 7 erreicht werden.

In Fig. 11 sind anstatt einer strukturierten Oberfläche bereichsweise Einlagen 46 in dem verformbaren Element 7 angeordnet. Diese Material-Einlagen 46 können in einem regelmäßigen Muster angeordnet sein, welches beispielsweise einem Muster aus einer der Figuren 6, 7, 8 oder 9 entspricht. Durch diese Einlagen 46 kann ebenfalls eine Fig. 5 entsprechende Druckverteilung in dem verformbaren Element 7 realisiert sein.

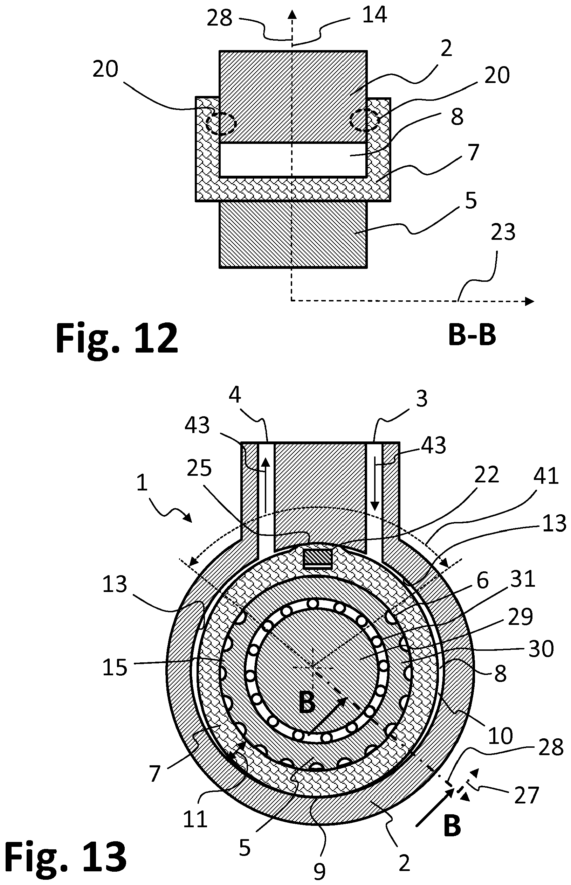

Fig. 12 zeigt einen Schnitt durch eine beschriebene Pumpe beliebigen Typs entlang der Schnittrichtung B-B aus Fig. 2. Zu erkennen sind die radiale Richtung 28 und die geometrische Achse 23 der Pumpe. Dargestellt sind insbesondere das Pumpengehäuse 2, der Exzenter 5 und das verformbare Element 7. Die Fig. 12 zeigt die ringförmigen axialen Abdichtungen 20, die beidseitig des Förderkanals 8 zwischen dem Pumpengehäuse 2 und dem verformbaren Element 7 ausgebildet sind, um den Förderkanal 8 (axial) beidseitig abzudichten. Diese ringförmigen axialen Abdichtungen 20 können beispielsweise durch eine Klemmung oder eine Klebung des verformbaren Elements 7 an dem Pumpengehäuse 2 hergestellt sein.

Fig. 13 zeigt einen Schnitt durch eine Pumpe 1, welcher dem in Fig. 2 dargestellten Schnitt durch eine Pumpe 1 entspricht. Zusätzlich weist die Außenfläche 6 des Exzenters 5 der Pumpe 1 aus Fig. 13 einen Winkelabschnitt 41 auf, welcher keine strukturierte Oberfläche 15 aufweist. Dieser Winkelabschnitt 41 ist gegenüberliegend zum Einlass 3 und zum Auslass 4 angeordnet, so dass der Winkelabschnitt 41 den Einlass 3 und den Auslass 4 abdeckt.

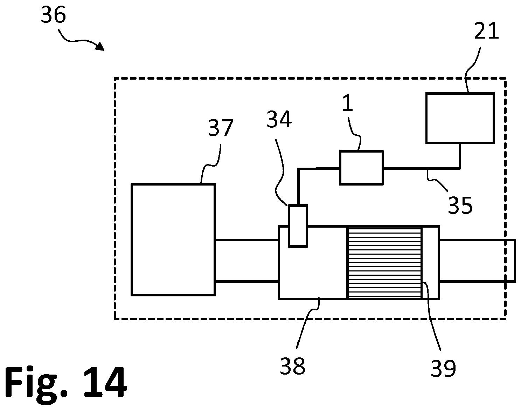

Fig. 14 zeigt ein Kraftfahrzeug 36, aufweisend eine Verbrennungskraftmaschine 37 und eine Abgasbehandlungsvorrichtung 38 zur Reinigung der Abgase der Verbrennungskraftmaschine 37. In der Abgasbehandlungsvorrichtung 38 ist ein SCR-Katalysator 39 angeordnet, mit dem Abgase der Verbrennungskraftmaschine 37 mit dem Verfahren der selektiven katalytischen Reduktion gereinigt werden können. An der Abgasbehandlungsvorrichtung 38 ist ein Injektor 34 angeordnet, welcher mit Hilfe einer beschriebenen Pumpe 1 mit Flüssigkeit zur Abgasreinigung aus einem Tank 21 versorgt werden kann. Dazu sind der Tank 21, die Pumpe 1 und der Injektor 34 über eine Leitung 35 miteinander verbunden.

### Bezugszeichenliste

- 1: Pumpe
- 2: Pumpengehäuse
- 3: Einlass
- 4: Auslass
- 5: Exzenter
- 6: Außenfläche
- 7: verformbares Element
- 8: Förderkanal
- 9: verschiebbare Abdichtung
- 10: Pumpenvolumen
- 11: Pumpenspalt
- 12: Betriebsdruck
- 13: Innenumfangsfläche
- 14: Mittelebene
- 15: strukturierte Oberfläche
- 16: Druckverteilung
- 17: lokales Druckmaximum
- 18: lokales Druckminimum
- 19: Wellung
- 20: ringförmige Abdichtung
- 21: Tank
- 22: Stift
- 23: Geometrische Achse
- 24: Antrieb
- 25: Stationäre Abdichtung
- 26: Antriebswelle
- 27: Umfangsrichtung
- 28: radiale Richtung
- 29: Exzenterbereich
- 30: Lagerring
- 31: Lager
- 32: Wellenberge
- 33: Wellentäler
- 34: Injektor
- 35: Leitung
- 36: Kraftfahrzeug
- 37: Verbrennungskraftmaschine
- 38: Abgasbehandlungsvorrichtung
- 39: SCR-Katalysator
- 40: Vertiefung
- 41: Winkelabschnitt
- 42: Golfballoberfläche
- 43: Förderrichtung
- 44: Druckachse
- 45: theoretische Druckverteilung
- 46: Einlagen

## Patentansprüche

1. Pumpe (1) zur Förderung einer Flüssigkeit, aufweisend zumindest ein Pumpengehäuse (2) mit mindestens einem Einlass (3) und mindestens einem Auslass (4), und mit einer Innenumfangsfläche (13) und einer geometrischen Achse (23), wobei innerhalb des Pumpengehäuses (2) ein Exzenter (5) angeordnet ist und der Exzenter (5) um die geometrische Achse (23) relativ zu dem Pumpengehäuse (2) exzentrisch bewegbar ist, wobei in einem Pumpenspalt (11) zwischen der Innenumfangsfläche (13) des Pumpengehäuses (2) und einer Außenfläche (6) des Exzenters (5) ein verformbares Element (7) angeordnet ist und wobei mit dem verformbaren Element (7) und der Innenumfangsfläche (13) des Pumpengehäuses (2) ein Förderkanal (8) von dem mindestens einen Einlass (3) zu dem mindestens einen Auslass (4) ausgebildet ist und wobei weiter das verformbare Element (7) von der Außenfläche (6) des Exzenters (5) entlang mindestens eines Abschnitts des Förderkanals (8) derart gegen das Pumpengehäuse (2) gedrückt wird, dass mindestens eine verschiebbare Abdichtung (9) des Förderkanals (8) und zumindest ein geschlossenes Pumpenvolumen (10) in dem Förderkanal (8) ausgebildet sind, die zur Förderung der Flüssigkeit durch eine exzentrische Bewegung des Exzenters (5) entlang des Förderkanals (8) von dem Einlass (3) zu dem Auslass (4) verschiebbar sind, **dadurch gekennzeichnet, dass** die Außenfläche (6) des Exzenters (5) eine strukturierte Oberfläche (15) aufweist.

2. Pumpe (1) nach Patentanspruch 1, wobei durch die strukturierte Oberfläche (15) im Bereich der verschiebbaren Abdichtung (9) im verformbaren Element (7) eine Druckverteilung (16) existiert, die entlang des Förderkanals (8) mindestens ein lokales Druckmaximum (17) und mindestens ein lokales Druckminimum (18) bildet.

3. Pumpe (1) nach Patentanspruch 2, wobei die strukturierte Oberfläche (15) so ausgebildet ist, dass das der Druck in dem verformbaren Element an einem lokalen Druckminimum (18) größer ist als ein vorbestimmter maximaler Betriebsdruck (12) der Pumpe (1).

4. Pumpe (1) nach einem der vorhergehenden Patentansprüche, wobei der Exzenter (5) einen äußeren Lagerring (30) und einen inneren Exzenterbereich (29) aufweist, wobei zwischen dem äußeren Lagerring (30) und dem inneren Exzenterbereich (29) ein Lager (31) angeordnet ist, durch welches eine exzentrische Drehbewegung des inneren Exzenterbereiches (29) in eine exzentrische kreisende Bewegung des äußeren Lagerrings (30) umgesetzt wird, und die Außenfläche (6) mit der strukturierten Oberfläche (15) auf dem äußeren Lagerring (30) angeordnet ist.

5. Pumpe (1) nach Patentanspruch 4, wobei ein äußerer Lagerring (30) des Exzenters (5) relativ zu dem Pumpengehäuse (2) drehfest ist.

6. Pumpe (1) nach einem der vorhergehenden Patentansprüche, wobei die strukturierte Oberfläche (15) eine parallel zur geometrischen Achse (23) ausgerichtete Wellung (19) mit Wellenbergen (32) und Wellentälern (33) umfasst.

7. Pumpe (1) nach einem der vorhergehenden Patentansprüche, wobei die Wellenberge (32) der Wellung (19) einen Abstand zueinander aufweisen, der kleiner ist als eine Ausdehnung der verschiebbaren Abdichtung (9) in Umfangsrichtung (27) entlang des Förderkanals (8), so dass mit den Wellenbergen (32) in der verschiebbaren Abdichtung (9) entlang des Förderkanals (8) zumindest zwei lokale Druckmaxima (17) ausgebildet sind.

8. Pumpe (1) nach einem der vorhergehenden Patentansprüche, wobei die strukturierte Oberfläche (15) ein Muster von Vertiefungen (40) der Außenfläche (6) aufweist, wobei die Vertiefungen (40) jeweils umlaufend begrenzt sind.

9. Pumpe (1) nach einem der vorhergehenden Patentansprüche, wobei die strukturierte Oberfläche der Außenfläche (6) des Exzenters (5) in einem Winkelabschnitt (41) um die geometrische Achse (23) unterbrochen ist, wobei der Winkelabschnitt (41) zumindest den Einlass (3) oder den Auslass (4) abdeckt.

10. Kraftfahrzeug (36), aufweisend eine Verbrennungskraftmaschine (37), eine Abgasbehandlungsvorrichtung (38) zur Reinigung der Abgase der Verbrennungskraftmaschine (37) sowie eine Pumpe (1) nach einem der Patentansprüche 1 bis 9, wobei die Pumpe (1) dazu eingerichtet ist ein flüssiges Additiv zur Abgasreinigung aus einem Tank (21) zu einem Injektor (34) zu fördern, mit dem das flüssige Additiv der Abgasbehandlungsvorrichtung (38) zugeführt werden kann.

## Claims

1. Pump (1) for delivering a liquid, having at least one pump housing (2) with at least one inlet (3) and at least one outlet (4), and having an inner circumferential face (13) and a geometric axis (23), wherein an eccentric (5) is arranged within the pump housing (2) and the eccentric (5) is movable in eccentric fashion relative to the pump housing (2) about the geometric axis (23), wherein a deformable element (7) is arranged in a pump gap (11) between the inner circumferential face (13) of the pump housing (2) and an outer face (6) of the eccentric (5), and wherein a delivery duct (8) is formed from the at least one inlet (3) to the at least one outlet (4) by the deformable element (7) and by the inner circumferential face (13) of the pump housing (2), and wherein furthermore, the deformable element (7) is pressed against the pump housing (2) along at least one section of the delivery duct (8) by the outer face (6) of the eccentric (5) such that at least one displaceable seal (9) of the delivery duct (8) and at least one closed pump volume (10) are formed in the delivery duct (8), these being displaceable along the delivery duct (8) from the inlet (3) to the outlet (4) by means of an eccentric movement of the eccentric (5) for the delivery of the liquid, **characterized in that** the outer face (6) of the eccentric (5) has a structured surface (15).

2. Pump (1) according to Patent Claim 1, wherein, owing to the structured surface (15) in the region of the displaceable seal (9), there exists in the deformable element (7) a pressure distribution (16) which, along the delivery duct (8), forms at least one local pressure maximum (17) and at least one local pressure minimum (18).

3. Pump (1) according to Patent Claim 2, wherein the structured surface (15) is designed such that the pressure in the deformable element at a local pressure minimum (18) is higher than a predetermined maximum operating pressure (12) of the pump (1).

4. Pump (1) according to one of the preceding patent claims, wherein the eccentric (5) has an outer bearing ring (30) and an inner eccentric region (29), wherein, between the outer bearing ring (30) and the inner eccentric region (29), there is arranged a bearing (31) by means of which an eccentric rotational movement of the inner eccentric region (29) is converted into an eccentric circulating movement of the outer bearing ring (30), and the outer face (6) with the structured surface (15) is arranged on the outer bearing ring (30).

5. Pump (1) according to Patent Claim 4, wherein an outer bearing ring (30) of the eccentric (5) is rotationally fixed relative to the pump housing (2).

6. Pump (1) according to one of the preceding patent claims, wherein the structured surface (15) comprises an undulation (19) which is oriented parallel to the geometric axis (23) and which has undulation peaks (32) and undulation troughs (33).

7. Pump (1) according to one of the preceding patent claims, wherein the undulation peaks (32) of the undulation (19) have a spacing to one another which is smaller than an extent of the displaceable seal (9) in a circumferential direction (27) along the delivery duct (8), such that, by means of the undulation peaks (32), at least two local pressure maxima (17) are formed in the displaceable seal (9) along the delivery duct (8).

8. Pump (1) according to one of the preceding patent claims, wherein the structured surface (15) has a pattern of depressions (40) of the outer face (6), wherein the depressions (40) are delimited in each case in encircling fashion.

9. Pump (1) according to one of the preceding patent claims, wherein the structured surface of the outer face (6) of the eccentric (5) is interrupted in an angle segment (41) about the geometric axis (23), wherein the angle segment (41) covers at least the inlet (3) or the outlet (4).

10. Motor vehicle (36), having an internal combustion engine (37), an exhaust-gas treatment device (38) for the purification of the exhaust gases of the internal combustion engine (37), and a pump (1) according to one of Patent Claims 1 to 9, wherein the pump (1) is designed to deliver a liquid additive for exhaust-gas purification from a tank (21) to an injector (34), by means of which the liquid additive can be supplied to the exhaust-gas treatment device (38).

## Revendications

1. Pompe (1) pour refouler un liquide, présentant au moins un carter de pompe (2) avec au moins une entrée (3) et au moins une sortie (4), et avec une surface périphérique intérieure (13) et un axe géométrique (23), un excentrique (5) étant disposé à l'intérieur du carter de pompe (2) et l'excentrique (5) pouvant être déplacé de manière excentrique par rapport au carter de pompe (2) autour de l'axe géométrique (23), un élément déformable (7) étant disposé dans un interstice de pompe (11) entre la surface périphérique intérieure (13) du carter de pompe (2) et une surface extérieure (6) de l'excentrique (5), et un canal de refoulement (8) étant réalisé avec l'élément déformable (7) et la surface périphérique intérieure (13) du carter de pompe (2) entre l'au moins une entrée (3) et l'au moins une sortie (4), et l'élément déformable (7) étant de plus pressé contre le carter de pompe (2) par la surface extérieure (6) de l'excentrique (5) le long d'au moins une portion du canal de refoulement (8) de telle sorte qu'au moins un joint d'étanchéité déplaçable (9) du canal de refoulement (8) et au moins un volume de pompe fermé (10) soient réalisés dans le canal de refoulement (8), lesquels peuvent être déplacés pour refouler le liquide par un déplacement excentrique de l'excentrique (5) le long du canal de refoulement (8) depuis l'entrée (3) jusqu'à la sortie (4), **caractérisée en ce que** la surface extérieure (6) de l'excentrique (5) présente une surface structurée (15) .

2. Pompe (1) selon la revendication 1, dans laquelle une répartition de pression (16) est obtenue dans l'élément déformable (7) par la surface structurée (15) dans la région du joint d'étanchéité déplaçable (9), laquelle forme le long du canal de refoulement (8) au moins un maximum de pression local (17) et au moins un minimum de pression local (18).

3. Pompe (1) selon la revendication 2, dans laquelle la surface structurée (15) est réalisée de telle sorte que la pression dans l'élément déformable, dans le cas d'un minimum de pression local (18), soit supérieure à une pression de fonctionnement maximale prédéterminée (12) de la pompe (1).

4. Pompe (1) selon l'une quelconque des revendications précédentes, dans laquelle l'excentrique (5) présente une bague de palier extérieure (30) et une région d'excentrique intérieure (29), un palier (31) étant disposé entre la bague de palier extérieure (30) et la région d'excentrique intérieure (29), par le biais duquel palier un déplacement en rotation excentrique de la région d'excentrique intérieure (29) est converti en un déplacement circulaire excentrique de la bague de palier extérieure (30), et la surface extérieure (6) avec la surface structurée (15) est disposée sur la bague de palier extérieure (30).

5. Pompe (1) selon la revendication 4, dans laquelle une bague de palier extérieure (30) de l'excentrique (5) est solidaire en rotation par rapport au boîtier de pompe (2).

6. Pompe (1) selon l'une quelconque des revendications précédentes, dans laquelle la surface structurée (15) comprend une ondulation (19) orientée parallèlement à l'axe géométrique (23) avec des sommets d'ondulations (32) et des vallées d'ondulations (33).

7. Pompe (1) selon l'une quelconque des revendications précédentes, dans laquelle les sommets d'ondulations (32) de l'ondulation (19) présentent un espacement les uns par rapport aux autres qui est inférieur à une extension du joint d'étanchéité déplaçable (9) dans la direction périphérique (27) le long du canal de refoulement (8), de sorte qu'avec les sommets d'ondulations (32), soient réalisés dans le joint d'étanchéité déplaçable (9) le long du canal de refoulement (8) au moins deux maximaux de pression locaux (17).

8. Pompe (1) selon l'une quelconque des revendications précédentes, dans laquelle la surface structurée (15) présente un motif de renfoncements (40) de la surface extérieure (6), les renfoncements (40) étant à chaque fois limités sur la périphérie.

9. Pompe (1) selon l'une quelconque des revendications précédentes, dans laquelle la surface structurée de la surface extérieure (6) de l'excentrique (5) est interrompue dans une portion angulaire (41) autour de l'axe géométrique (23), la portion angulaire (41) recouvrant au moins l'entrée (3) ou la sortie (4).

10. Véhicule automobile (36) présentant un moteur à combustion interne (37), un dispositif de traitement des gaz d'échappement (38) pour purifier les gaz d'échappement du moteur à combustion interne (37) ainsi qu'une pompe (1) selon l'une quelconque des revendications 1 à 9, la pompe (1) étant prévue pour refouler un additif fluide en vue de la purification des gaz d'échappement hors d'un réservoir (21) jusqu'à un injecteur (34), avec lequel l'additif fluide peut être acheminé au dispositif de traitement de gaz d'échappement (38).
